# FASCICULE DE BREVET EUROPEEN

(11) **EP 0 730 665 B1**
(45) Date de publication et mention de la délivrance du brevet: **15.12.1999**
(21) Numéro de dépôt: 93914810.2
(22) Date de dépôt: 05.07.1993
(51) Int. Cl.: C14B 7/04, B32B 9/02

(54) **MATERIAU COMPOSITE STRATIFIE COMPRENANT UNE PEAU, UN CUIR NATUREL OU UN DE LEURS SOUS-PRODUITS ET UN OU PLUSIEURS PRODUITS ELASTIQUES ADJACENTS**
IN SCHICHTEN AUFGEBAUTES KOMPOSITMATERIAL MIT EINEM FELL, EINEM NATURLEDER ODER EINEM VON DEREN UNTERPRODUKTEN UND EINEM ODER MEHREREN DAMIT VERBUNDENEN ELASTISCHEN PRODUKTEN
LAMINATED COMPOSITE MATERIAL INCLUDING A HIDE, NATURAL LEATHER OR A BY-PRODUCT THEREOF AND ONE ORE MORE ADJACENT RESILIENT MATERIALS

(43) Date de publication de la demande: 11.09.1996
(73) Titulaire: Guenoun, Henri, F-06650 Le Rouret (FR)
(72) Inventeur: Guenoun, Henri, F-06650 Le Rouret (FR)
(74) Mandataire: Rinuy, Santarelli
(86) Numéro de dépôt international: FR9300686
(87) Numéro de publication internationale: WO9502072

(56) Documents cités:
- WO-A-93/03918
- DE-A- 1 660 088
- FR-A- 735 251
- FR-A- 1 428 245
- FR-A- 2 191 561
- FR-A- 2 583 063
- US-A- 2 136 092
- US-A- 2 269 923

## Description

La présente invention a pour objet un matériau composite stratifié en deux couches ou plus, adjacentes comprenant une peau ou un cuir ou un de leurs sous produits adjacents à un ou plusieurs produits présentant un caractère d'élasticité.

L'invention a également trait au procédé d'obtention d'un tel matériau ainsi qu'à ses applications.

On sait, que d'une manière générale, les peaux et cuirs tannés utilisés traditionnellement pour le façonnage d'articles divers souples ou rigides, subissent souvent des contraintes, provoquant ainsi des déformations qui tardent à se rétracter à leur forme et volume initial, lorsque ces contraintes exercées sont de force supérieure à leur valeur d'élasticité, provoquent des déformations résiduelles irréversibles ou déchiquetage.

La présente invention a entre autres pour but de valoriser certains sous produits de l'affinage ou du refendage des peaux ou cuirs naturels. Ces sous produits sont appelés communément : « croûte »,«souscroûte »,représentant une des couches intérieures d'un cuir ou d'une peau refendue dans son épaisseur, ou " fleur sciée " représentant la couche extérieure d'un cuir ou d'une peau refendue dans son épaisseur.

Ces produits sont souvent caractérisés par de faibles résistances aux contraintes, ainsi que de faibles épaisseurs, mais présentant en surface des aspects comparables aux peaux et cuirs utilisés traditionnellement.

Ces sous produits, du fait de leurs caractéristiques précitées, présentent un intérêt réduit et sont peu utilisés dans la pratique.

On connaît du brevet d'invention français n°1.428.245 un matériau stratifié comprenant des sous produits d'affinage de peaux ou cuirs et une armature constituée par un tissu à maille de renfort. On connaît également du document WO93/03918 un matériau stratifié comprenant des produits d'affinage et une matrice élastique. Toutefois aucun des documents ne permet de remédier aux inconvénients ci-dessus énoncés.

A l'effet de remédier à ces inconvénients, l'invention a pour objet de procéder à une stratification de ces cuirs, peaux, ou sous produits, par jonc tion à une ou plusieurs couches de produits, présentant individuellement ou par leur ensemble, des caractéristiques d'élasticité propres à conformer 1' ensemble stratifié ainsi obtenu aux spécificités habituellement requises, pour les peaux ou cuirs traditionnellement utilisés et permettre en plus l'élasticité de l'ensemble.

La présente invention peut être utilisée dans toutes les industries employant des cuirs ou peausseries de bovins, d'équidés, d'ovins, de caprins ou autres, provenant d'espèces animales diverses ou employant les sous produits d 'affinage ou de refendage de ces matières, et notamment dans les industries de la chaussure, du meuble, de l'habillement, de la maroquinerie, de la chapellerie, de la sellerie et de la ganterie.

La présente invention permet la confection d'articles ou vêtements divers, épousant les formes pour lesquels ils sont destinés, tout en conservant à ces articles, des possibilités de variations et de conformations instantanées à leurs diverses contraintes.

La réalisation de la présente invention fait intervenir les phases successives suivantes :
- 1ère Phase : Elasticimétrie, choix du support.
   Selon l'utilisation des articles pour lesquels ils sont destinés, on procède aux mesures des contraintes que peuvent subir ces articles, et l'on choisit des cuirs, des peaux ou l'un de leurs sous produits, et l'on procède au calcul de leur point de rupture. Afin de leur conférer une meilleure extensibilité, on évite pendant le tannage et le séchage de ces derniers, tout étirage ou cadrage. On choisit un support élastique dont la limite d' étirement est inférieur à la limite d'étirement et de rupture des cuirs, peaux, ou l'un de leurs sous produits.
   Ce support peut être choisi élastique en un sens, ou dans tous les sens selon les besoins. Il peut entre autres être un tissu de maille élastique ou élastifié, une toile élastique ou élastifiée, un tissu enduit d'un produit élastique, une membrane élastique contrecollée ou non à un ou plusieurs supports, un tissu élastifié qui comporte soit un mélange avec un fil élasthanne ou un polyester modifié, soit un polyamide texturé dit "stretch".
- 2ème Phase : Dérayage - Ponçage.
   On procède à l'égalisation du cuir côté chair afin de planifier cette surface. Cette opération devant avantager l'encollage du tissu.
- 3ème Phase : Encollage.
   Cette opération est réalisée par thermo-collage à l'aide d'une presse à thermo-coller manuelle, automatique, électromagnétique ou pneumatique, en contre collant l'envers du support choisi à la surface côté chair du cuir, de la peau ou de l'un des sous produits, en plaçant entre ces dernières un voile de résine thermo-collant.

Les conditions de thermo-collage peuvent varier en fonction, soit du support à thermo-coller, ou encore des deux. Cette opération peut être effectuée au fer à repasser en petite surface. Evidemment, l'encollage peut être réalisé par pulvérisation de colle sur les surfaces à encoller ou par une machine à rideau. Naturellement, à un stade industriel, les opérations ci-dessus décrites, sont susceptibles d'être effectuées par des machines spécialement conçues pour cet usage et à l'aide de produits liants appropriés.

Il est certain que l'invention présente, n'est pas limitative aux formes de réalisation ci-dessus décrites et que des variantes telles que le revêtement du cuir côté chair par enduction, ou collage de produits élastiques, notamment en caoutchouc, polyuréthane, polychlorure de vinyl (P.V.C.), élastomère ou les produits en ces matières (feuille, tissu,...) ainsi que les tissus comportant des fibres élastiques sont envisageables.

## Revendications

1. Matériau composite stratifié en deux couches ou plus comprenant en surface une fleur de cuir sciée, une croûte ou sous croûte provenant de refendage de peau ou cuir naturel lié à un support présentant dans son ensemble un caractère d'élasticité du à l'un ou à plusieurs de ses composants, caractérisé en ce que le support possède une limite d'extension inférieure à la limite et au point de rupture de la croûte, sous croûte ou fleur sciée liée.

2. Matériau selon la revendication 1 caractérisé en ce que ledit support est ou comporte une toile comprenant des fibres élastiques.

3. Matériau selon la revendication 1 caractérisé en ce que ledit support est ou comporte du caoutchouc.

4. matériau selon la revendication 1 caractérisé en ce que ledit support est ou comporte du polyuréthane;

5. matériau selon la revendication 1 caractérisé en ce que ledit support est ou comporte du polychlorure de vinyl.

6. matériau selon la revendication 1 caractérisé en ce que ledit support est ou comporte de l'élastomère.

7. matériau selon la revendication 1 caractérisé en ce que le support est ou comporte du polyamide.

8. matériau selon la revendication 1 caractérisé en ce que ledit support est ou comporte un tissu comprenant des fibres en élasthane.

9. matériau selon la revendication 1 caractérisé en ce que ledit support est ou comporte une membrane élastique;

10. matériau selon la revendication 1 caractérisé en ce que ledit support est ou comporte un ou plusieurs matériaux élastiques.

11. matériau selon la revendication 1 caractérisé en ce que la ou les matières formant le support sont liées par encollage à la fleur de cuir, croûte ou sous croûte de cuir, constituant la surface.

12. matériau selon la revendication 1 caractérisé en ce que l'encollage de la fleur sciée de cuir, croûte ou sous croûte de cuir à son ou ses supports est effectué à un stade intermédiaire.

## Patentansprüche

1. Kompositmaterial, aufgebaut aus zwei oder mehr Schichten mit einem geschnittenen Narbenleder an der Oberfläche, einer Haut oder Unterhaut, herrührend aus der Spaltung von Fell oder Naturleder, das mit einem Träger verbunden ist, der aufgrund eines oder mehrerer der Bestandteile insgesamt einen elastischen Charakter aufweist, dadurch gekennzeichnet, daß der Träger an der Bruchgrenze und am Bruchpunkt der Haut, Unterhaut oder der verbindenden geschnittenen Narbe eine untere Grenzdehnung besitzt.

2. Material nach Anspruch 1, dadurch gekennzeichnet, daß der Träger elastische Fasern umfassendes Leinen ist oder aufweist.

3. Material nach Anspruch 1, dadurch gekennzeichnet, daß der Träger Kautschuk ist oder aufweist.

4. Material nach Anspruch 1, dadurch gekennzeichnet, daß der Träger Polyurethan ist oder aufweist.

5. Material nach Anspruch 1, dadurch gekennzeichnet, daß der Träger Polyvinylchlorid ist oder aufweist.

6. Material nach Anspruch 1, dadurch gekennzeichnet, daß der Träger ein Elastomer ist oder aufweist.

7. Material nach Anspruch 1, dadurch gekennzeichnet, daß der Träger ein Polyamid ist oder aufweist.

8. Material nach Anspruch 1, dadurch gekennzeichnet, daß der Träger ein Elastanfasern umfassendes Gewebe ist oder aufweist.

9. Material nach Anspruch 1, dadurch gekennzeichnet, daß der Träger eine elastische Membran ist oder aufweist.

10. Material nach Anspruch 1, dadurch gekennzeichnet, daß der Träger aus einem oder mehreren elastischen Materialien ist oder diese aufweist.

11. Material nach Anspruch 1, dadurch gekennzeichnet, daß das oder die den Träger bildenden Materialien durch Verleimung mit dem Narbenleder, der Haut oder der Unterhaut des Leders verbunden sind und die Oberfläche bilden.

12. Material nach Anspruch 1, dadurch gekennzeichnet, daß die verleimung des geschnittenen Narbenleders, der Haut oder Unterhaut des Leders an ihrem oder ihren Träger(n) in einer Zwischenstufe durchgeführt wird.

## Claims

1. Laminated composite material in two or more layers comprising at its surface an outer layer of sawn hide, an inner layer or an underlayer originating from the splitting of natural skin or hide attached to a support which has a elastic character overall due to one or more of its components, characterized in that the support has an extension limit which is less than the limit and break point of attached inner layer, underlayer or outer layer of sawn hide.

2. Material according to claim 1, characterized in that said support is or includes a cloth comprising elastic fibres.

3. Material according to claim 1, characterized in that said support is or includes rubber.

4. Material according to claim 1, characterized in that said support is or includes polyurethane.

5. Material according to claim 1, characterized in that said support is or includes polyvinyl chloride.

6. Material according to claim 1, characterized in that said support is or includes elastomer.

7. Material according to claim 1, characterized in that the support is or includes polyamide.

8. Material according to claim 1, characterized in that said support is or includes a fabric comprising elastane fibres.

9. Material according to claim 1, characterized in that said support is or includes an elastic membrane.

10. Material according to claim 1, characterized in that said support is or includes one or more elastic materials.

11. Material according to claim 1, characterized in that the material or materials forming the support are attached by gluing to the outer layer of hide, inner or underlayer of hide, constituting the surface.

12. Material according to claim 1, characterized in that the gluing of the outer layer of sawn hide, inner layer or underlayer of hide to its support or supports is carried out in an intermediate stage.
